# EUROPÄISCHE PATENTSCHRIFT

(11) **EP 3 640 115 B1**
(45) Veröffentlichungstag und Bekanntmachung des Hinweises auf die Patenterteilung: **07.07.2021**
(21) Anmeldenummer: 18201388.8
(22) Anmeldetag: 19.10.2018
(51) Int. Cl.: B62B 5/06, B62B 5/00, B65D 19/42, B62B 3/14

(54) **ROLLPALETTE**
ROLLER PALLET
PALETTE ROULANTE

(43) Veröffentlichungstag der Anmeldung: 22.04.2020
(73) Patentinhaber: FEIL rolltainer GmbH, 59602 Rüthen (DE)
(72) Erfinder: Waldemar, Biehl, 59581 Warstein (DE)
(74) Vertreter: Andrejewski - Honke Patent- und Rechtsanwälte Partnerschaft mbB

(56) Entgegenhaltungen:
- EP-A2- 2 676 861
- WO-A1-2011/017818
- CN-A- 101 177 106
- US-A- 4 976 448

## Beschreibung

Die Erfindung betrifft eine Rollpalette, mit einer größtenteils horizontal angeordneten Basis, ferner mit unterseitig an die Basis angeschlossenen Rädern, wobei wenigstens zwei Räder jeweils um eine größtenteils vertikale Achse schwenkbar ausgebildet sind, und mit zumindest einem sich überwiegend vertikal erstreckenden und an der Basis angeordneten Bügel, wobei ferner der Bügel als an die Basis lösbar anbringbarer sowie in Seitenansicht L-förmiger Schiebebügel ausgebildet ist, wobei weiter der Schiebebügel im Wesentlichen zweiteilig mit einem Handbügel und wenigstens einem Fixierschenkel ausgebildet ist, und wobei der Handbügel den überwiegend vertikal gegenüber der Basis hochstehenden einen L-Schenkel des Schiebebügels darstellt, während der andere L-Schenkel demgegenüber vom Fixierschenkel gebildet wird, welcher folgerichtig größtenteils horizontal und parallel zur Basis verläuft.

Rollpaletten werden typischerweise genutzt, um Waren zu transportieren, beispielsweise Lebensmittel von einem Großhändler zu Einzelhändlern. Darüber hinaus werden Rollpaletten eingesetzt, um beispielsweise Werkzeugteile, Maschinenteile etc. zu einem Montageplatz zu befördern. Anschließend wird die Rollpalette wieder zurückgeholt, um sie erneut zu bestücken.

Aus diesem Grund sind Rollpaletten bzw. deren Basen typischerweise aus Kunststoff hergestellt, um eine leichte Reinigung, einen hygienischen Gebrauch und auch eine einfache Handhabe zu ermöglichen. Darüber hinaus sind solche Rollpaletten oftmals stapelbar gestaltet, um sie gesammelt zu transportieren. Das kann beispielhaft mit einem Gabelstapler oder auch einem anderen Hebezeug erfolgen.

Rollpaletten in ihrem grundsätzlichen Aufbau werden in der DE 698 01 230 T2 beschrieben. Hier geht es um einen stapelbaren Rollwagen, bei welchem zusätzlich Rückhalteeinrichtungen vorgesehen sind. Mit Hilfe der Rückhalteeinrichtung wird das mindestens eine schwenkbar montierte Rad eines darüberliegenden Rollwagens zurückgehalten.

Der Stand der Technik nach der DE 1 556 049 beschäftigt sich mit einer Rollpalette, die an zwei gegenüberliegenden Seiten mit aufragenden Wandteilen ausgerüstet ist. Dabei sind seitliche Holme der Wandteile oberhalb der Palette durch Einschaltung eines federnden Gelenkes biegsam. Auf diese Weise können die Wandteile gegeneinander geneigt werden. Außerdem sind die Wandteile lösbar an der Basis angebracht. Die Wandteile werden aufgrund ihrer Flexibilität bis zum Ladegut herangeschwenkt und durch elastische Zugmittel gegeneinander verspannt.

Beim gattungsbildenden Stand der Technik nach der WO 2011/017818 A1 geht es um eine Rollpalette, die zusätzlich mit einem Bügel ausgerüstet ist. Ein Handbügel lässt sich von einer vertikalen in eine horizontale Position überführen. Zusätzlich ist ein an eine Basis angeschlossener fixierter Bügel realisiert.

Der Stand der Technik hat sich grundsätzlich bewährt. Allerdings sind die flexiblen seitlichen Holme der Wandteile bzw. die Wandteile insgesamt bei der Lehre nach der DE 1 556 049 lediglich dazu geeignet, Ladegut gegenüber der Basis zu fixieren. Wenn jedoch mit Hilfe der Rollpalette beispielsweise von Hand darauf befindliches Ladegut bewegt werden soll und das Ladegut selbst keine geeignete Angriffsfläche für eine manuelle Beaufschlagung, beispielsweise einen zum Transportieren erforderlichen Schiebevorgang zur Verfügung stellt, stößt die bekannte Lehre an Grenzen. Derartige Anforderungen zur manuellen Manipulation solcher Rollpaletten ergeben sich in der Praxis nicht nur dann, wenn auf der Basis beispielsweise leichtes Ladegut transportiert werden soll. Sondern oftmals erfordert auch der Rücktransport der Rollpaletten zum erneuten Bestücken eine manuelle Manipulation. Das alles soll darüber hinaus flexibel gewährleistet werden können.

Beim gattungsbildenden Stand der Technik nach der WO 2011/017818 A1 fällt auf, dass der Handbügel und der Schiebebügel jeweils an der Basis verbleiben, wobei der Handbügel auf die Basis abgeklappt werden kann. Dadurch lassen sich zwar besonders große Ladungen bewegen. Allerdings ist ein alternativer Transport mithilfe beispielsweise eines Gabelstaplers nicht vorgesehen. Hier setzt die Erfindung ein.

Der Erfindung liegt das technische Problem zugrunde, eine derartige Rollpalette so weiterzuentwickeln, dass eine insbesondere manuelle Manipulation der Rollpalette mit und ohne aufliegendem Ladegut möglich ist und darüber hinaus unverändert die Option besteht, die Rollpalette motorisch zu bewegen, beispielsweise mit einem Gabelstapler oder anderen Förderfahrzeugen.

Zur Lösung dieser technischen Problemstellung schlägt die Erfindung bei einer gattungsgemäßen Rollpalette vor, dass der Fixierschenkel wenigstens eine schwenkbar an den Fixierschenkel angeschlossene Federklammer aufweist.

Der Schiebebügel ist in der Regel starr bzw. allenfalls klappbar ausgebildet, verfügt also im Unterschied zum gattungsbildenden Stand der Technik nach der DE 1 556 049 nicht über ein federndes Gelenk. Durch die L-Form lässt sich der Schiebebügel besonders vorteilhaft und intuitiv lösbar auf der Basis der Rollpalette festlegen, um die Rollpalette manipulieren zu können. Dazu kann beispielsweise eine Bedienperson den Schiebebügel ergreifen und die Rollpalette mit oder ohne darauf befindlichem Ladegut schieben und zu einem gewünschten Ort transportieren.

Erfindungsgemäß ist der Schiebebügel im Wesentlichen zweiteilig mit dem Handbügel und wenigstens dem Fixierschenkel ausgebildet. Der Handbügel stellt dabei den überwiegend vertikal gegenüber der Basis hochstehenden einen L-Schenkel des in Seitenansicht L-förmigen Schiebebügels dar. Der andere L-Schenkel wird demgegenüber vom Fixierschenkel gebildet, welcher folgerichtig größtenteils horizontal und folglich parallel zur Basis verläuft. Dadurch kann der Fixierschenkel unschwer lösbar an der Basis festgelegt werden.

Meistens sind zwei Fixierschenkel vorgesehen. Ferner ist die Auslegung überwiegend so getroffen, dass der Handbügel in Frontansicht größtenteils U-förmig ausgebildet ist. Außerdem ist der Handbügel jeweils endseitig mit dem zugehörigen Fixierschenkel verbunden. Aufgrund der in Frontansicht U-förmigen Gestaltung des Handbügels finden sich jeweils endseitig des Handbügels die beiden zuvor angesprochenen und nach vorteilhafter Ausgestaltung realisierten Fixierschenkel.

Wie einleitend bereits erläutert, ist der erfindungsgemäß vorgesehene Schiebebügel größtenteils starr und lediglich optional klappbar ausgebildet. Um die optionale Klappbarkeit zu realisieren, sind der Handbügel und der wenigstens eine Fixierschenkel schwenkbar miteinander gekoppelt. Zu diesem Zweck können der Handbügel und der Fixierschenkel jeweils eine Lagerplatte für einen darin aufgenommenen Bolzen als Drehachse aufweisen. Die Lagerplatte findet sich dabei jeweils fußseitig des Handbügels respektive an einem Ende des Fixierschenkels, dem handbügelseitigen Ende. Sobald der Bolzen eine jeweilige Öffnung in der zugehörigen Lagerplatte durchgreift und die beiden Öffnungen in einerseits der Lagerplatte am Handbügel und andererseits der Lagerplatte am Fixierschenkel miteinander fluchten, definiert der Bolzen eine Drehachse, welche die gewünschte Klappbarkeit des Schiebebügels zur Verfügung stellt.

Damit es bei einem Schiebevorgang nicht zum möglicherweise ungewollten Zusammenklappen des Schiebebügels kommt, lässt sich der Bolzen gegenüber den beiden Lagerplatten bedarfsweise fixieren. Dadurch besteht die Möglichkeit, den Schiebebügel wahlweise zusammenzuklappen oder auseinanderzuklappen, wobei beide Stellungen im Bedarfsfall fixiert werden können. Auf diese Weise lässt sich der Schiebebügel beispielsweise in zusammengeklapptem Zustand unschwer zu einer Rollpalette transportieren und hier an dieser montieren. Umgekehrt stellt der auseinandergeklappte und ebenfalls gesicherte Zustand des Schiebebügels sicher, dass die Rollpalette von einem Bediener einwandfrei geschoben werden kann, auch mit darauf befindlicher Last oder entsprechendem Lagegut. Diese Flexibilität eröffnet darüber hinaus die Möglichkeit, vorhandene Rollpaletten mit dem Schiebebügel bedarfsweise auszurüsten. Eine etwaige maschinelle Manipulation der fraglichen Rollpaletten ist dadurch nach wie vor möglich. Auch lassen sich bereits vorhandene Rollpaletten mit dem Schiebebügel je nach Bedarf ausrüsten. Dadurch wird eine besonders große Flexibilität zur Verfügung gestellt. Hierin sind die wesentlichen Vorteile zu sehen.

Um den Fixierschenkel bzw. die beiden Fixierschenkel mit der Basis zu koppeln, ist der Fixierschenkel mit wenigstens einem Steckzapfen zum Eingriff in eine Steckaufnahme in der Basis ausgerüstet. Meistens sind zwei Steckzapfen am Fixierschenkel vorgesehen. Dabei wird man regelmäßig so vorgehen, dass jeweils ein Steckzapfen an jedem Ende des längserstreckten Fixierschenkels vorgesehen ist.

Da darüber hinaus und vorteilhaft der Fixierschenkel von seiner Länge her an eine Seitenlänge der Basis angepasst ist, übergreift der Fixierschenkel die Basis an der fraglichen Seite über praktisch ihre gesamte Länge. Die beiden jeweils endseitig des Fixierschenkels vorgesehenen Steckzapfen sorgen zugleich für eine einwandfreie Festlegung des Fixierschenkels an der Basis. Durch die gewählte Auslegung finden sich die Steckzapfen des Fixierschenkels jeweils eckseitig der Basis.

Mit Hilfe der Steckzapfen wird der Fixierschenkel und damit der Schiebebügel insgesamt in die zugehörigen Steckaufnahmen in der Basis eingesteckt. Die lösbare Fixierung wird nun zusätzlich und erfindungsgemäß dadurch realisiert und umgesetzt, dass der Fixierschenkel mit wenigstens der Federklammer ausgerüstet ist. Die Federklammer ist dabei schwenkbar an den Fixierschenkel angeschlossen. Außerdem verfügt die Federklammer vorteilhaft über einen die Basis untergreifenden Rastschenkel. Bei der lösbaren Fixierung der Federklammer an der Basis greift diese typischerweise in eine Ausnehmung randseitig der Basis lösbar ein.

Dadurch kann zunächst der Schiebebügel mit den Steckzapfen an den Fixierschenkeln bzw. dem einen Fixierschenkel in die zugehörigen Steckaufnahmen der Basis eingesteckt werden. Damit sich der Fixierschenkel im Anschluss hieran nicht von der Basis wieder lösen kann, wird die an den Fixierschenkel schwenkbar angeschlossene Federklammer so verschwenkt, dass die jeweiligen Rastschenkel die Basis untergreifen. Jetzt ist der Fixierschenkel und damit der Schiebebügel insgesamt mit der Basis lösbar gekoppelt. Zum Entfernen des Schiebebügels von der Basis ist es lediglich erforderlich, den Rastschenkel der Federklammer von der Basis wegzuschwenken, sodass im Anschluss hieran der Schiebebügel mit seinen Steckzapfen aus den zugehörigen Steckaufnahmen herausgezogen werden kann.

Der Schiebebügel ist überwiegend aus einem oder mehreren Metallrohren aufgebaut. Dadurch kann die Federklammer unschwer schwenkbar an dem rohrförmigen Fixierschenkel platziert werden. Im Übrigen ist der Aufbau des Schiebebügels aus Metallrohren mit dem weiteren Vorteil verbunden, dass sich solche Metallrohre besonders einfach verarbeiten lassen, kostengünstig zur Verfügung stehen und im Übrigen keine scharfen Ecken und Kanten aufweisen, sodass etwaige Verletzungen des Bedienpersonals bei der Manipulation praktisch ausgeschlossen sind. In Verbindung der Möglichkeit, eine Rollpalette wahlweise mit dem Schiebebügel flexibel auszurüsten oder eben nicht, wird insgesamt eine neuartige Logistiklösung zur Verfügung gestellt, die einen besonders flexiblen Einsatz ermöglicht. Hierin sind die besonderen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Rollpalette in einer perspektivischen Ansicht und
- Fig. 2: den lösbar an der Rollpalette anbringbaren Schiebebügel in einer Einzelansicht.

In den Figuren ist eine Rollpalette dargestellt, die typischerweise in Handels- oder Logistikunternehmen eingesetzt wird, um auf einer größtenteils horizontal angeordneten Basis 1 unterschiedliche Ladegüter zu transportieren, die in den Figuren nicht explizit dargestellt sind. Unterseitig an die Basis 1 sind Räder 2, 3 angeschlossen. Von den insgesamt vier unterseitig an die Basis 1 angeschlossenen Rädern 2, 3 sind wenigstens zwei Räder 3 jeweils um eine größtenteils vertikale Achse schwenkbar ausgebildet. Nach dem Ausführungsbeispiel sind die beiden Räder 3 als Schwenkrollen ausgelegt, während es sich bei den beiden weiteren Rädern 2 um Bockrollen handelt, die feststehen. Grundsätzlich können natürlich auch sämtliche vier Räder 2, 3 insgesamt schwenkbar gestaltet sein, was jedoch nicht dargestellt ist.

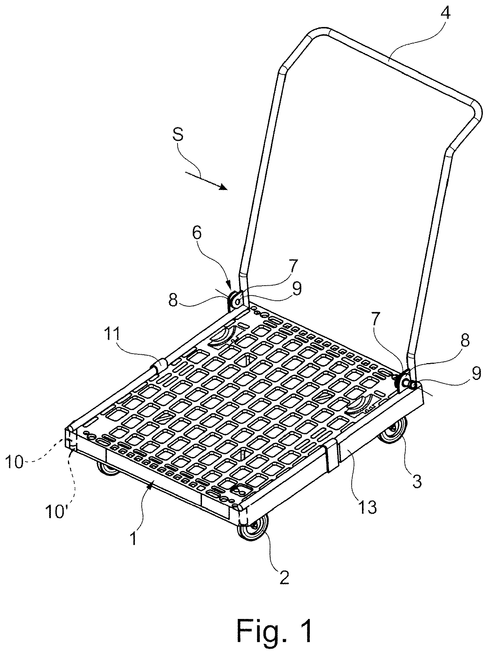

Die Basis 1 ist darüber hinaus mit zumindest einem sich überwiegend vertikal erstreckenden und an der Basis 1 angeordneten Bügel 4, 5 ausgerüstet. Bei dem Bügel 4, 5 handelt es sich erfindungsgemäß um einen an der Basis 1 lösbar anbringbaren sowie in Seitenansicht S L-förmigen Schiebebügel. Die Seitenansicht S ist in der Fig. 1 durch einen entsprechenden Pfeil gekennzeichnet. Der Schiebebügel 4, 5 ist insgesamt starr und nach dem Ausführungsbeispiel klappbar unter Realisierung einer Klappachse bzw. schwenkbaren Achse 6 ausgebildet, wie nachfolgend noch näher im Detail erläutert wird.

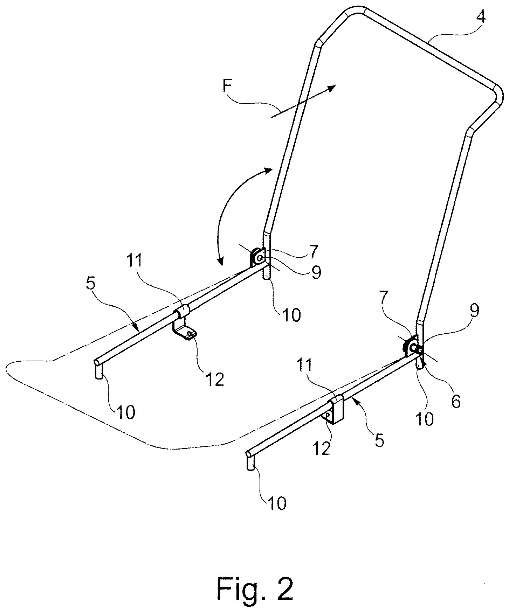

Anhand der perspektivischen Darstellung des Schiebebügels 4, 5 in der Fig. 2 erkennt man, dass der Schiebebügel 4, 5 im Wesentlichen zweiteilig mit einem Handbügel 4 und wenigstens einem Fixierschenkel 5 ausgerüstet ist. Nach dem Ausführungsbeispiel ist der Handbügel 4 in der in Fig. 2 angedeuteten Frontansicht F größtenteils U-förmig ausgebildet. An die beiden auf diese Weise gebildeten U-Schenkel des Handbügel 4 sind dabei jeweils endseitig die beiden zugehörigen Fixierschenkel 5 angeschlossen. Dabei sind der Handbügel 4 und die beiden Fixierschenkel 5 schwenkbar miteinander gekoppelt, und zwar unter Berücksichtigung der zuvor bereits angesprochenen Achse 6.

Zu diesem Zweck verfügen der Handbügel 4 und der jeweilige Fixierschenkel 5 über jeweils eine Lagerplatte 7, 8. Tatsächlich ist die Lagerplatte 7 an den Handbügel 4 angeschlossen, wohingegen die Lagerplatte 8 am zugehörigen Fixierschenkel 5 vorgesehen ist. Die Lagerplatte 8 am Handbügel 4 findet sich endseitig seines zugehörigen U-Schenkels. Die Lagerplatte 8 am Fixierschenkel 5 ist an einem Ende des Fixierschenkels 5 realisiert, nämlich an dem dem Bügel 4 zugewandten Ende des Fixierschenkels 5. Beide Lagerplatten 7, 8 sind mit wenigstens einer Lageröffnung für einen hierin eingreifenden Bolzen 9 ausgerüstet, welcher die zuvor bereits angesprochene Achse 6 definiert. Der Bolzen 9 lässt sich bedarfsweise fixieren, damit der erfindungsgemäß vorgesehene Schiebebügel 4, 5 sowohl in seiner auseinandergeklappten und in der Fig. 2 dargestellten Position als auch in einer hier strichpunktiert angedeuteten, zusammengeklappten Stellung bedarfsweise fixiert werden kann und insgesamt starr ausgelegt ist.

Die beiden Fixierschenkel 5 sind jeweils endseitig mit einem Steckzapfen 10 ausgerüstet. Der Steckzapfen 10 greift in eine zugehörige und lediglich in der Fig. 1 angedeutete Steckaufnahme 10' ein. Nach dem Ausführungsbeispiel sind zwei Steckzapfen 10 jeweils endseitig des zugehörigen Fixierschenkels 5 vorgesehen. Da darüber hinaus der jeweilige Fixierschenkel 5 eine an die Seitenlänge der Basis 1 angepasste Länge aufweist, wird der Fixierschenkel 5 über die gesamte betreffende Seitenlänge an der Basis 1 lösbar festgelegt. Dazu sind insgesamt vier Steckaufnahmen 10' realisiert, die jeweils eckseitig der Basis 1 ihre Anordnung finden.

Für die lösbare Festlegung des Fixierschenkels 5 ist im Wesentlichen eine zusätzlich vorgesehene Federklammer 11, 12 realisiert. Die Federklammer 11, 12 verfügt über einen Drehschenkel 11 und einen Rastschenkel 12. Da die beiden Fixierschenkel 5 ebenso wie der Handbügel 4 insgesamt aus Metallrohren aufgebaut sind, kann die Federklammer 11, 12 schwenkbar mit Hilfe ihres Drehschenkels 11 gegenüber dem Fixierschenkel 5 bewegt werden. Sobald die Steckzapfen 10 an den Fixierschenkeln 5 in die zugehörigen Steckaufnahmen 10' in der Basis 1 eingreifen und die in etwa mittig des zugehörigen Fixierschenkels 5 vorgesehenen Federklammern 11, 12 mit ihrem Rastschenkel 12 die Basis 1 untergreifen, ist der jeweilige Fixierschenkel 5 und damit der Schiebebügel 4, 5 insgesamt an der Basis 1 lösbar festgelegt.

Die Federklammer 11, 12 bzw. ihr Rastschenkel 12 greift bei diesem Vorgang zusätzlich in eine Ausnehmung 13 an einem Seitenrand der Basis 1 ein, welcher mit Hilfe des Rastschenkels 12 bzw. der Federklammer 11, 12 insgesamt umgriffen wird. Dadurch steht die Federklammer 11, 12 in montiertem Zustand des Schiebebügels 4, 5 nicht seitlich gegenüber der Basis 1 vor und lassen sich hierdurch etwaige Verletzungen von Bedienpersonal von vornherein verhindern.

Um den Schiebebügel 4, 5 von der Basis 1 wieder zu entfernen, ist es lediglich erforderlich, die beiden Federklammern 11, 12 an den zugehörigen Fixierschenkeln 5 mit ihrem Rastschenkel 12 gegenüber der Basis 1 zu lösen. Anschließend können die Steckzapfen 10 aus den Steckaufnahmen 10' in der Basis 1 herausgezogen werden. Jetzt steht der Schiebebügel 4, 5 in der in Fig. 2 dargestellten Funktionsstellung zur Verfügung und kann anschließend um die Achse 6 in die strichpunktiert dargestellte Position in seinen eingeklappten Zustand überführt werden. Eine zusätzliche Fixierung des Bolzens 9 sorgt in diesem eingeklappten Zustand dafür, dass der Schiebebügel 4, 5 nicht unbeabsichtigt aufschwenkt. Vergleichbar kann der Bolzen 9 in dem in der Fig. 2 dargestellten aufgeklappten Zustand festgelegt werden, sodass der Schiebebügel 4, 5 bei Belastung durch beispielsweise eine Bedienperson nicht ungewollt einklappt.

## Patentansprüche

1. Rollpalette, mit einer größtenteils horizontal angeordneten Basis (1), ferner mit unterseitig an die Basis (1) angeschlossenen Rädern (2, 3), wobei
- wenigstens zwei Räder (3) jeweils um eine größtenteils vertikale Achse schwenkbar ausgebildet sind, und mit zumindest einem sich überwiegend vertikal erstreckenden und an der Basis (1) angeordneten Bügel (4, 5), wobei ferner
- der Bügel (4, 5) als an der Basis (1) lösbar anbringbarer sowie in Seitenansicht (S) L-förmiger Schiebebügel (4, 5) ausgebildet ist, wobei weiter
- der Schiebebügel (4, 5) im Wesentlichen zweiteilig mit einem Handbügel (4) und wenigstens einem Fixierschenkel (5) ausgebildet ist, und wobei
- der Handbügel (4) den überwiegend vertikal gegenüber der Basis (1) hochstehenden einen L-Schenkel des Schiebebügels darstellt, während der andere L-Schenkel demgegenüber vom Fixierschenkel (5) gebildet wird, welcher folgerichtig größtenteils horizontal und parallel zur Basis (1) verläuft,
**dadurch gekennzeichnet, dass**
- der Fixierschenkel (5) wenigstens eine schwenkbar an den Fixierschenkel (5) angeschlossene Federklammer (11, 12) aufweist.

2. Rollpalette nach Anspruch 1, **dadurch gekennzeichnet, dass** zwei Fixierschenkel (5) vorgesehen sind.

3. Rollpalette nach Anspruch 1 oder 2, **dadurch gekennzeichnet, dass** der Handbügel (4) in Frontansicht (F) größtenteils U-förmig ausgebildet und jeweils endseitig mit dem zugehörigen Fixierschenkel (5) verbunden ist.

4. Rollpalette nach einem der Ansprüche 1 bis 3, **dadurch gekennzeichnet, dass** der Handbügel (4) und der wenigstens eine Fixierschenkel (5) schwenkbar miteinander gekoppelt sind.

5. Rollpalette nach einem der Ansprüche 1 bis 4, **dadurch gekennzeichnet, dass** der Handbügel (4) und der Fixierschenkel (5) jeweils eine Lagerplatte (7, 8) für einen darin aufgenommenen Bolzen (9) als Drehachse (6) aufweisen.

6. Rollpalette nach einem der Ansprüche 1 bis 5, **dadurch gekennzeichnet, dass** der Fixierschenkel (5) wenigstens einen Steckzapfen (10) zum Eingriff in eine Steckaufnahme (10') in der Basis (1) aufweist.

7. Rollpalette nach Anspruch 6, **dadurch gekennzeichnet, dass** zwei Steckzapfen (10) am Fixierschenkel (5) vorgesehen sind.

8. Rollpalette nach Anspruch 7, **dadurch gekennzeichnet, dass** jeweils ein Steckzapfen (10) an jedem Ende des längserstreckten Fixierschenkels (5) vorgesehen ist.

9. Rollpalette nach einem der Ansprüche 1 bis 8, **dadurch gekennzeichnet, dass** die Federklammer (11, 12) mit einem die Basis (1) untergreifenden Rastschenkel (12) ausgerüstet ist.

10. Rollpalette nach einem der Ansprüche 1 bis 9, **dadurch gekennzeichnet, dass** die Federklammer (11, 12) in eine Ausnehmung (13) randseitig der Basis (1) lösbar eingreift.

11. Rollpalette nach einem der Ansprüche 1 bis 10, **dadurch gekennzeichnet, dass** der Fixierschenkel (5) eine an eine Seitenlänge der Basis (1) angepasste Länge aufweist.

12. Rollpalette nach einem der Ansprüche 1 bis 11, **dadurch gekennzeichnet, dass** der Schiebebügel (4, 5) überwiegend aus Metallrohren aufgebaut ist.

## Claims

1. A rolling pallet, having a largely horizontal base (1) and having wheels (2, 3) attached to the underside of the base (1),
- at least two wheels (3) each being pivotable about a largely vertical axis, and having at least one handle (4, 5) which extends mainly vertically and is arranged on the base (1),
- the handle (4, 5) being in the form of a push-handle (4, 5) which can be attached detachably to the base (1) and is L-shaped in side view (S),
- the push-handle (4, 5) being in substantially two parts with a grip handle (4) and at least one fixing arm (5), and
- the grip handle (4) forming the L-arm of the push-handle which stands mainly vertical to the base (1), while the other L-arm is formed by the fixing arm (5), which consequently runs largely horizontally and parallel to the base (1),
**characterised in that**
- the fixing arm (5) has at least one spring clamp (11, 12) which is attached pivotably to the fixing arm (5).

2. The rolling pallet according to Claim 1, **characterised in that** two fixing arms (5) are provided.

3. The rolling pallet according to Claim 1 or 2, **characterised in that** the grip handle (4) is largely U-shaped when viewed from the front (F) and is connected at each end to the associated fixing arm (5).

4. The rolling pallet according to any one of Claims 1 to 3, **characterised in that** the grip handle (4) and the at least one fixing arm (5) are coupled pivotably to each other.

5. The rolling pallet according to any one of Claims 1 to 4, **characterised in that** the grip handle (4) and the fixing arm (5) each have a bearing plate (7, 8) for a bolt (9) held therein as a rotation axis (6).

6. The rolling pallet according to any one of Claims 1 to 5, **characterised in that** the fixing arm (5) has at least one insertion peg (10) for engagement in an insertion receptacle (10') in the base (1).

7. The rolling pallet according to Claim 6, **characterised in that** two insertion pegs (10) are provided on the fixing arms (5).

8. The rolling pallet according to Claim 7, **characterised in that** an insertion peg (10) is provided at each end of the elongate fixing arm (5).

9. The rolling pallet according to any one of Claims 1 to 8, **characterised in that** the spring clamp (11, 12) is equipped with a latching arm (12) which fits under the base (1).

10. The rolling pallet according to any one of Claims 1 to 9, **characterised in that** the spring clamp (11, 12) engages detachably in a recess (13) on the edge of the base (1).

11. The rolling pallet according to any one of Claims 1 to 10, **characterised in that** the fixing arm (5) has a length adapted to a side length of the base (1).

12. The rolling pallet according to any one of Claims 1 to 11, **characterised in that** the push-handle (4, 5) is mainly constructed from metal tubes.

## Revendications

1. Palette roulante, dotée d'une base (1) placée majoritairement à l'horizontale, par ailleurs de roues (2, 3) raccordées sur la base (1), sur sa face inférieure,
- au moins deux roues (3) étant conçues en étant pivotantes autour d'un axe majoritairement vertical, et dotée d'au moins un étrier (4, 5) s'étendant majoritairement à la verticale et placé sur la base (1), par ailleurs
- l'étrier (4, 5) étant conçu sous la forme d'un étrier de poussée (4, 5), susceptible d'être monté de manière amovible sur la base (1) et conçu en forme de L en vue latérale (S), en outre
- l'étrier de poussée (4, 5) étant conçu sensiblement en deux parties, avec un étrier manuel (4) et au moins une branche de fixation (5), et
- l'étrier manuel (4) représentant l'une des branches du L de l'étrier de poussée, majoritairement debout à la verticale par rapport à la base (1), alors que l'autre branche du L est formée a contrario par la branche de fixation (5), qui logiquement s'écoule majoritairement à l'horizontale et à la parallèle de la base (1),
**caractérisée en ce que**
- la branche de fixation (5) comporte au moins un crampon à ressort (11, 12) raccordé de manière pivotante sur la branche de fixation (5).

2. Palette roulante selon la revendication 1, **caractérisée en ce que** deux branches de fixation (5) sont prévues.

3. Palette roulante selon la revendication 1 ou 2, **caractérisée en ce qu'**en vue frontale (F), l'étrier manuel (4) est conçu majoritairement en forme de U et est assemblé respectivement sur le côté d'extrémité avec la branche de fixation (5) associée.

4. Palette roulante selon l'une quelconque des revendications 1 à 3, **caractérisée en ce que** l'étrier manuel (4) et l'au moins une branche de fixation (5) sont couplés l'un à l'autre de manière pivotante.

5. Palette roulante selon l'une quelconque des revendications 1 à 4, **caractérisée en ce que** l'étrier manuel (4) et la branche de fixation (5) comportent respectivement une plaque d'appui (7, 8) pour un boulon (9) qui y est logé, en tant qu'axe de rotation (6).

6. Palette roulante selon l'une quelconque des revendications 1 à 5, **caractérisée en ce que** la branche de fixation (5) comporte au moins un tenon enfichable (10) destiné à s'engager dans un logement d'enfichage (10') dans la base (1).

7. Palette roulante selon la revendication 6, **caractérisée en ce que** deux tenons enfichables (10) sont prévus sur la branche de fixation (5).

8. Palette roulante selon la revendication 7, **caractérisée en ce que** respectivement un tenon enfichable (10) est prévu sur chaque extrémité de la branche de fixation (5) allongée.

9. Palette roulante selon l'une quelconque des revendications 1 à 8, **caractérisée en ce que** le crampon à ressort (11, 12) est équipé d'une branche d'enclenchement (12) s'engageant par le dessous sur la base (1).

10. Palette roulante selon l'une quelconque des revendications 1 à 9, **caractérisée en ce que** le crampon à ressort (11, 12) s'engage de manière amovible dans un évidement (13) sur le côté du bord de la base (1).

11. Palette roulante selon l'une quelconque des revendications 1 à 10, **caractérisée en ce que** la branche de fixation (5) présente une longueur adaptée à une longueur latérale de la base (1).

12. Palette roulante selon l'une quelconque des revendications 1 à 11, **caractérisée en ce que** l'étrier de poussée (4, 5) est conçu majoritairement en tubes métalliques.
